# FASCICULE DE BREVET EUROPEEN

(11) **EP 2 834 057 B1**
(45) Date de publication et mention de la délivrance du brevet: **01.06.2016**
(21) Numéro de dépôt: 13713201.5
(22) Date de dépôt: 02.04.2013
(51) Int. Cl.: B29C 49/56, B29C 49/78

(54) **MACHINE DE FORMAGE COMPORTANT UNE CONDUITE DE COMMUNICATION ENTRE UNE CHAMBRE DE COMPENSATION ET UNE TUYÈRE ET PROCÉDÉ DE MISE EN OEUVRE DE LA MACHINE**
FORMMASCHINE MIT EINER KOMMUNIKATIONSLEITUNG ZWISCHEN EINER AUSGLEICHSKAMMER UND EINER DÜSE UND VERFAHREN ZUM BETREIBEN EINER SOLCHEN MASCHINE
FORMING MACHINE COMPRISING A COMMUNICATION PIPE BETWEEN A COMPENSATION CHAMBER AND A NOZZLE AND PROCESS FOR USING THE MACHINE

(30) Priorité: 02.04.2012 FR 1252972
(43) Date de publication de la demande: 11.02.2015
(73) Titulaire: Sidel Participations, 76930 Octeville sur Mer (FR)
(72) Inventeur: CHOMEL, Nicolas, F-76930 Octeville Sur Mer (FR); LECOMTE, Frédéric, F-76930 Octeville Sur Mer (FR)
(74) Mandataire: Siloret, Patrick
(86) Numéro de dépôt international: PCT/EP2013/056869
(87) Numéro de publication internationale: WO 2013/149988

(56) Documents cités:
- EP-A2- 0 736 366
- FR-A1- 2 659 265
- US-A1- 2005 142 243

## Description

L'invention concerne une machine de formage de récipients en matériau thermoplastique comportant un moule, des moyens de soufflage et une chambre de compensation.

L'invention concerne plus particulièrement une machine de formage de récipients en matériau thermoplastique comportant :
- un moule réalisé en au moins deux demi-moules délimitant une cavité de moulage lorsque leurs deux faces de joint sont serrées transversalement l'une contre l'autre ;
- deux supports dont chacun porte un demi-moule associé ;
- une conduite de formage qui est susceptible de raccorder, par l'intermédiaire d'une tuyère, le col d'un récipient compris dans la cavité de moulage avec au moins une source de fluide à une pression de formage ;
- des premiers moyens commandés d'obturation qui sont interposés dans la conduite de formage ;
- au moins une conduite d'échappement qui est raccordée en dérivation avec la conduite de formage entre les premiers moyens commandés d'obturation et la tuyère ;
- des deuxièmes moyens commandés d'obturation qui sont interposés dans chaque conduite d'échappement ;
- au moins une chambre de compensation à pression de fluide qui est interposée transversalement entre au moins un support et le demi-moule associé ;
- une conduite de compensation qui raccorde la chambre de compensation avec une source de fluide à une pression de travail, la conduite de compensation étant agencée parallèlement à la conduite de formage ;
- des troisièmes moyens commandés d'obturation qui sont interposés dans la conduite de compensation ;
- une conduite de dérivation qui est raccordée en dérivation avec la conduite de compensation entre les troisièmes moyens d'obturation et la chambre de compensation ;
- des quatrièmes moyens commandés d'obturation qui sont interposés dans la conduite de dérivation ;

On connaît déjà des machines de formage de ce type. Un récipient présentant sa forme finale, appelé par la suite "récipient final", est fabriqué par déformation d'un récipient présentant une forme initiale, appelé par la suite "préforme".

Lors de la fabrication d'un récipient final, une préforme en matériau thermoplastique chauffé est insérée dans la cavité de moulage.

Puis un fluide de formage sous pression est injecté dans la préforme par l'intermédiaire de la conduite de formage. Le fluide sous pression pousse les parois malléables de la préforme contre les parois de la cavité pour donner au récipient sa forme définitive.

La pression du fluide de formage a tendance à écarter les deux demi-moules l'un de l'autre. Ceci provoque un interstice au niveau du plan de joint des deux demi-moules. Le matériau thermoplastique prend l'empreinte de ce plan de joint, ce qui se traduit par l'apparition d'un cordon vertical en saillie le long du récipient.

Pour éviter l'apparition de l'empreinte du plan de joint, la chambre de compensation est mise sous pression de manière à pousser le demi-moule vers l'autre demi-moule à l'encontre de l'effort d'écartement. Ainsi, les deux demi-moules demeurent joints l'un contre l'autre durant l'opération de formage. Le récipient ne porte ainsi pas de trace de cordon.

Pour que ce dispositif soit parfaitement efficace, la chambre de compensation doit être mise sous pression avant que le fluide de formage sous pression ne soit injecté dans la préforme via la tuyère.

A l'issue de l'opération de formage, les deux demi-moules doivent pouvoir être écartés l'un de l'autre pour extraire le récipient final ainsi formé. A cet effet, il est préférable que la pression dans la cavité de moulage soit égale à la pression atmosphérique pour éviter une détente trop brutale du fluide de formage. Le fluide de formage est donc évacué du récipient final et de la tuyère par une conduite d'échappement.

De même, il est nécessaire de faire baisser la pression de la chambre de compensation jusqu'à la pression atmosphérique sous peine d'endommager la machine.

Il est connu de commander l'évacuation du fluide de travail sous pression après et/ou pendant que le fluide de formage ait été évacué et avant l'ouverture du moule.

Pour éviter que le moule ne soit ouvert accidentellement avant que la pression de la chambre de compensation ne soit revenue à la pression atmosphérique, il est prévu une première temporisation de sécurité entre l'évacuation du fluide de travail et l'ouverture du moule.

Pour éviter le marquage du plan de joint sur le récipient, une deuxième temporisation de sécurité est prévue entre l'évacuation du fluide de formage et l'évacuation du fluide de travail.

Cependant, cette double temporisation de sécurité allonge la durée d'un cycle de formage.

Pour résoudre notamment ce problème, l'invention propose une machine du type décrit précédemment, caractérisée en ce que la conduite de dérivation est raccordée à la conduite de formage entre les premiers moyens d'obstruction et la tuyère. Selon d'autres caractéristiques de la machine :
- les premiers et les deuxièmes moyens d'obturation sont commandés simultanément entre :
   - une position de formage dans laquelle les premiers moyens d'obturation permettent la communication entre la tuyère et la source de fluide dont la pression provoque un effort transversal d'écartement des deux demi-moules, tandis que les deuxièmes moyens d'obturations obturent la conduite d'échappement ;

   - et une position de détente dans laquelle les premiers moyens d'obturation obturent la conduite de formage, tandis que les deuxièmes moyens d'obturation permettent la communication entre la tuyère et des moyens de détente via la conduite d'échappement ;
- les premiers moyens d'obturation et les deuxièmes moyens d'obturation sont formés par une vanne commune à au moins trois voies dite de formage ;
- les troisièmes et les quatrièmes moyens d'obturation sont commandés simultanément entre :
   - une position de mise sous pression dans laquelle les troisièmes moyens d'obturation permettent la communication entre la chambre de compensation et la source de fluide de travail pour pousser ledit demi-moule à l'encontre de l'effort d'écartement, tandis que les quatrièmes moyens d'obturations obturent la conduite de dérivation ;
   - et une position de dérivation dans laquelle les troisièmes moyens d'obturation obturent la conduite de compensation, tandis que les quatrièmes moyens d'obturation permettent la communication entre la chambre de compensation et la conduite de formage via la conduite de dérivation ;
- les troisièmes moyens d'obturation et les quatrièmes moyens d'obturation sont formés par une vanne commune à au moins trois voies dite de compensation ;
- la pression de travail est égale à la pression de formage ;
- la conduite de formage et la conduite de compensation sont raccordées à une source commune de fluide sous pression ;
- les moyens de détente comportent une première conduite d'échappement qui est raccordée à la pression atmosphérique ;
- les moyens de détente comportent une deuxième conduite d'échappement qui est raccordée à un dispositif de stockage d'une partie du fluide dans un réservoir à une pression intermédiaire entre la pression de formage et la pression atmosphérique.

L'utilisation d'un tel réservoir permet avantageusement de récupérer du fluide de soufflage sous pression pour une utilisation ultérieure. Ceci permet notamment d'économiser de l'énergie en recyclant un fluide de soufflage dont la pression est déjà plus élevée que la pression atmosphérique.

L'invention concerne aussi un procédé de mise en oeuvre de la machine réalisée selon les enseignements de l'invention, caractérisé en ce que les troisièmes et quatrièmes moyens d'obturation sont commandés vers leur position de mise sous pression avant que la premiers et deuxièmes moyens d'obturation ne soient commandés vers leur position de formage.

Selon d'autres caractéristiques du procédé :
- les troisièmes et quatrièmes moyens d'obturation sont commandés vers leur position de dérivation avant que les premiers et deuxièmes moyens d'obturation ne soient commandés vers leur position d'échappement de manière que la pression de fluide dans la chambre de compensation soit équilibrée avec la pression du fluide dans la tuyère ;
- les troisièmes et quatrièmes moyens d'obturation sont commandés vers leur position de dérivation lorsque la pression à l'intérieur de la tuyère est égale à la pression de formage.

D'autres caractéristiques et avantages apparaitront au cours de la lecture de la description détaillée qui va suivre pour la compréhension de laquelle on se reportera aux dessins annexés parmi lesquels :
- la figure 1 est une vue de face qui représente schématiquement une machine de formage réalisée selon les enseignements de l'invention ;
- la figure 2 est un diagramme qui représente, en trait plein, l'évolution de la pression dans la tuyère en fonction du temps, et, en traits interrompus et croix, l'évolution de la pression dans la chambre de compensation en fonction du temps sur la même échelle de temps, lorsque la machine de la figure 1 est commandée selon un procédé de l'invention.

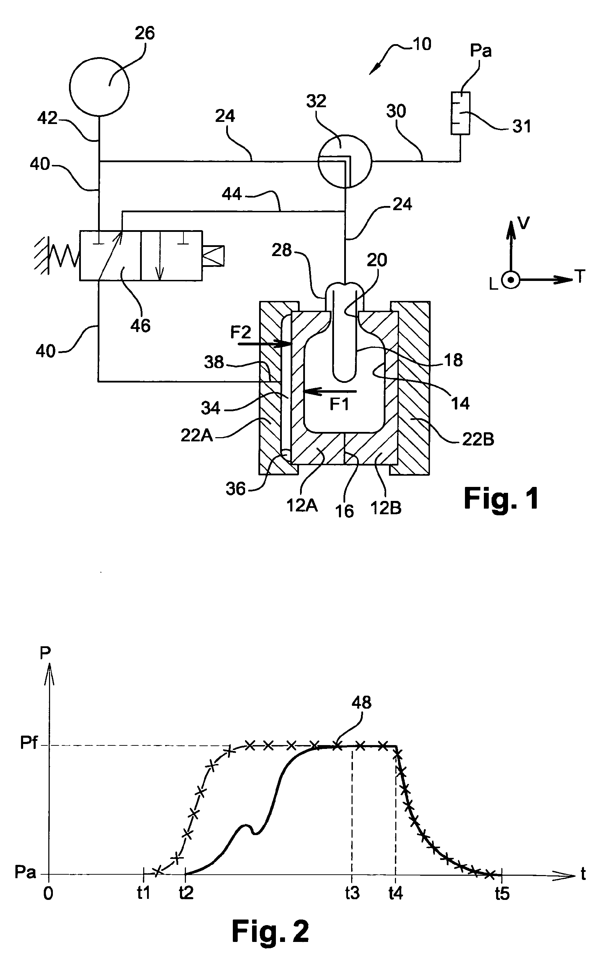

Pour la suite de la description, on adoptera de manière non limitative des orientations longitudinale, verticale et transversale indiquées par le trièdre "L,V,T" de la figure 1.

Pour la suite de la description, des éléments présentant une structure identique ou des fonctions analogues seront désignés par des mêmes numéros de référence.

On a représenté à la figure 1 une machine 10 de formage de récipients en matériau thermoplastique.

La machine 10 comporte un moule 12 réalisé en au moins deux demi-moules 12A, 12B délimitant une cavité 14 de moulage lorsque leurs deux faces de joint sont serrées transversalement l'une contre l'autre le long d'un plan 16 vertical de joint.Le corps d'une préforme 18 est reçu à l'intérieur de la cavité 14 de moulage. Un orifice 20 supérieur est prévu au niveau du plan de joint de manière à faire communiquer la cavité 14 de moulage avec l'extérieur. Un col de la préforme 18 fait saillie verticalement vers le haut en passant à travers cet orifice.

Chaque demi-moule 12A, 12B est porté par un support 22A, 22B associé. Chaque support 22A, 22B est agencé transversalement contre la face transversale extérieure opposée au plan 16 de joint de chaque demi-moule 12A, 12B.

Pour une description plus détaillée d'un tel ensemble de moule 12A, 12B et de support 22A, 22B de moules, on se reportera document FR-A1-2.659.265.

L'invention est notamment applicable à une unité de moulage telle que celle qui est décrite dans le document EP-A1-0.821.641. Dans ce document, le support 22A, 22B de moules est appelé "porte-moule", tandis que chaque demi-moule 12A, 12B est formé de l'assemblage d'une coquille sur un porte-coquille. Pour des informations plus détaillées concernant cette unité de moulage, on se reportera au document cité.

Une conduite 24 de formage est susceptible de raccorder la cavité 14 de moulage avec au moins une source 26 de fluide à une pression "Pf" de formage, par exemple à 40 bars.

Selon une variante non représentée de l'invention, la conduite formage est raccordée aussi à au moins une source de fluide à moyenne pression. Un dispositif non représenté permet d'alimenter l'intérieur de la préforme successivement avec chaque source à moyenne pression, puis à la source à haute pression.

La préforme est raccordée de manière étanche à la conduite 24 de formage par l'intermédiaire d'une tuyère 28. Ainsi, la pression à l'intérieur du récipient est sensiblement égale à la pression à l'intérieur de la tuyère.

La tuyère 24 présente ici une forme de cloche pour permettre le raccord étanche avec la préforme comprise dans la cavité 14 de moulage.

Selon une variante non représentée de l'invention, le raccord étanche entre la préforme et la tuyère est réalisé en insérant l'extrémité libre de la tuyère dans le col de la préforme, l'étanchéité étant réalisée entre la paroi cylindrique interne du col et la tuyère.

La tuyère 28 est ici montée coulissante entre une position supérieure dans laquelle est agencée verticalement à distance au-dessus de l'orifice 20 du moule 12A, 12B et une position inférieure dans laquelle la tuyère 28 en forme de cloche englobe le col de la préforme 18 pour raccorder de manière étanche le conduite 24 de formage avec l'intérieur de la préforme. Ceci permet d'injecter du fluide de formage à la pression "Pf" dans le corps de la préforme 18 qui est à l'intérieur de la cavité 14 de moulage.

Une conduite 30 d'échappement est raccordée en dérivation avec la conduite 24 de formage. La conduite 30 d'échappement est raccordée à des moyens de détentes qui sont ici formés par un silencieux 31 d'échappement en communication avec la pression atmosphérique "Pa".

Selon une variante non représentée de l'invention, la conduite d'échappement, en plus du silencieux, est raccordée à des moyens de stockage d'une partie du fluide sous pression dans un réservoir à une pression intermédiaire entre la pression "Pf" de formage et la pression "Pa" atmosphérique.

Selon encore une autre variante non représentée de l'invention, la machine comporte une deuxième conduite d'échappement qui raccorde en dérivation la conduite de formage avec un dispositif de stockage d'une partie du fluide dans un réservoir à une pression intermédiaire entre la pression de formage et la pression atmosphérique. La machine est alors équipée d'un ensemble de vannes qui est susceptible de raccorder alternativement la tuyère avec la source de fluide sous pression ou avec le silencieux ou avec les moyens de stockage.

Un tel dispositif de stockage permet avantageusement d'économiser de l'énergie en recyclant le fluide sous pression à chaque cycle de formage. Le fluide ainsi stocké peut être à nouveau comprimé à haute pression, ou utilisé tel quel comme source d'énergie pneumatique pour d'autres fonctions de l'installation.

La machine 10 comporte des moyens pour raccorder alternativement la tuyère 28 avec la source 26 de fluide sous pression ou avec la conduite 30 d'échappement.

A cet effet, la machine 10 comporte des premiers moyens commandés d'obturation qui sont interposés dans la conduite 24 de formage et des deuxièmes moyens commandés d'obturation qui sont interposés dans la conduite 30 d'échappement.

Les premiers moyens d'obturation sont agencés de manière que l'embranchement entre la conduite 30 d'échappement et la conduite 24 de formage soit interposé entre les premiers moyens d'obturation et la tuyère 28. En d'autres termes, les premiers moyens d'obturation sont agencé en amont de l'embranchement de la conduite 30 d'échappement avec la conduite 24 de formage, le terme "amont" étant utilisé en considérant un écoulement du fluide depuis la source 26 vers la tuyère 28.

Chaque moyen d'obturation est susceptible d'être commandé sélectivement entre une position d'obturation totale dans laquelle le passage de fluide est interdit et une position d'ouverture totale dans laquelle le passage de fluide est permis.

Les premiers moyens d'obturation et les deuxièmes moyens d'obturation sont ici formés par une vanne commune à trois voies dite vanne 32 de formage.

De manière non limitative, dans l'exemple représenté à la figure 1, la vanne 32 de formage est une vanne à boisseau.

On comprendra néanmoins que l'invention est applicable avec une vanne à tiroir ou encore deux vannes indépendantes à deux voies commandées simultanément.

La vanne 32 de formage est susceptible d'être commandée entre :
- une position de formage, telle que représentée à la figure 1, dans laquelle les premiers moyens d'obturation permettent la communication entre la tuyère 28 et la source 26 de fluide, tandis que les deuxièmes moyens d'obturations obturent totalement la conduite 30 d'échappement ;
- et une position de détente, qui est obtenue en tournant le boisseau de la vanne 32 d'un quart de tour dans un sens anti-horaire, dans laquelle les premiers moyens d'obturation obturent totalement la conduite 26 de formage, tandis que les deuxièmes moyens d'obturation permettent la communication entre la tuyère 28 et le silencieux 31.

Lorsque la vanne 32 de formage occupe sa position de formage, le corps de la préforme 18 est déformé par la pression "Pf" du fluide de formage s'écoulant depuis la source 26 de fluide.

La conduite 30 d'échappement étant obturée, la pression monte jusqu'à la pression "Pf" de formage. Lorsque le corps de la préforme épouse les parois de la cavité 14 de moulage, la pression "Pf" du fluide de formage provoque un effort transversal d'écartement des deux demi-moules 12A, 12B. L'effort d'écartement qui s'applique sur le demi-moule 12A représenté à gauche à la figure 1 est matérialisé par la flèche "F1".

La machine comporte aussi au moins une chambre 34 de compensation à pression de fluide qui est interposée transversalement entre le support 22A, représenté à gauche à la figure 1, et le demi-moule 12A associé.

La chambre 34 est fermée de manière étanche par un joint 36 déformable élastiquement qui permet un débattement transversal du demi-moule 12A par rapport au support 22A sans perte d'étanchéité.

Le support 22A comporte un orifice 38 traversant qui débouche dans la chambre 34 de compensation.

Une conduite 40 de compensation qui raccorde la chambre de compensation avec la source 26 de fluide à une pression de travail qui est égale à la pression "Pf" de formage. La conduite 24 de formage et la conduite 40 de compensation sont ainsi raccordées à une source commune de fluide sous pression.

Le fluide utilisé est ici de l'air comprimé.

La conduite 40 de compensation est agencée parallèlement à la conduite 24 de formage. Plus particulièrement, comme représenté à la figure 1, une conduite 42 commune raccorde la conduite 24 de formage et la conduite 40 de compensation avec la source 26 de fluide sous pression.

Selon une variante non représentée de l'invention, la machine comporte une première source de fluide de travail et une deuxième source distincte de fluide de formage.

Une conduite 44 de dérivation est raccordée en dérivation avec la conduite 40 de compensation. Ladite conduite 44 de dérivation est raccordée à la conduite 24 de formage entre la vanne 32 de formage et la tuyère 28.

Des troisièmes moyens commandés d'obturation sont interposés dans la conduite 40 de compensation de manière que l'embranchement avec la conduite 44 de dérivation soit agencé entre les troisièmes moyens d'obturation et la chambre 34 de compensation.

Des quatrièmes moyens commandés d'obturation sont interposés dans la conduite de dérivation.

Chaque moyen d'obturation est susceptible d'être commandé sélectivement entre une position d'obturation totale dans laquelle le passage de fluide est interdit et une position d'ouverture totale dans laquelle le passage de fluide est permis.

Les troisièmes moyens d'obturation et les quatrièmes moyens d'obturation sont ici formés par une vanne commune à trois voies dite vanne 46 de compensation.

La vanne 46 de compensation représentée à la figure 1 est une vanne à tiroir. A titre non limitatif une telle vanne est généralement appelé "distributeur 3/2", car elle comporte trois orifices de raccordement et le tiroir est susceptible d'occuper deux positions.

On comprendra néanmoins que l'invention est applicable avec une vanne à boisseau ou encore deux vannes indépendantes à deux voies commandées simultanément.

La vanne 46 de compensation est commandée alternativement entre :
- une position de mise sous pression, qui est obtenu en coulissant le tiroir de la figure 1 vers la gauche, dans laquelle les troisièmes moyens d'obturation permettent la communication entre la chambre 34 de compensation et la source 26 de fluide de travail, tandis que les quatrièmes moyens d'obturations obturent la conduite 44 de dérivation ;
- et une position de dérivation, qui est illustrée à la figure 1, dans laquelle les troisièmes moyens d'obturation obturent la conduite 40 de compensation, tandis que les quatrièmes moyens d'obturation permettent la communication entre la chambre 34 de compensation et la conduite 24 de formage via la conduite 44 de dérivation.

Le tiroir de la vanne 46 de compensation est ici rappelé élastiquement vers sa position de dérivation. Ceci permet notamment d'éviter que la vanne 46 de compensation ne reste bloquée dans sa position de mise en pression, ce qui empêcherait toute ouverture du moule en cas de problème.

En position de mise en pression, la pression "Pf" du fluide à l'intérieur de la chambre 34 de compensation permet de pousser le demi-moule 12A à l'encontre de l'effort d'écartement produit par le fluide dans la cavité 14 de moulage.

Un procédé d'utilisation de la machine 10 de formage est maintenant décrit en référence à la figure 2.

Au début d'un cycle de formage, la vanne 32 de formage occupe sa position de détente, tandis que la vanne 46 de compensation occupe sa position de dérivation. De ce fait, la pression de la chambre 34 de compensation et la pression dans la cavité 14 de moulage sont toutes les deux égales à la pression atmosphérique "Pa".

Une préforme 18 préalablement chauffée est reçue dans la cavité 14 de moulage, et la tuyère 28 est abaissée dans sa position inférieure. Le moule 12A, 12B est fermé.

A l'instant "t1", La vanne 46 de compensation est alors commandée vers sa position de mise en pression. La chambre 34 de compensation est en communication exclusivement avec la source 26 de fluide sous pression.

La pression monte jusqu'à atteindre la pression "Pf" de travail qui est ici égale à la pression de formage. De ce fait, un effort transversal "F2" est appliqué au demi-moule 12A pour le plaquer contre l'autre demi-moule 12B.

Lorsque la pression de la chambre 34 de compensation est égale à la pression "Pf" de formage à l'instant "t2", la vanne 32 de formage est commandée vers sa position de formage.

La pression dans le corps de la préforme 18 contenu dans la cavité 14 de moulage augmente jusqu'à atteindre la pression "Pf" de formage.

La montée en pression à l'intérieur du corps de la préforme 18 est régulée par des moyens de régulation non représentés mais bien connus de l'homme du métier.

Lorsque la préforme 18 épouse les parois de la cavité 14 de moulage, la pression "Pf" de formage est maintenue pendant une durée déterminée pour conférer à la préforme 18 sa forme définitive. La pression dans la cavité 14 de moulage forme ainsi un palier 48 comme représenté à la figure 2.

Durant ce palier 48 la pression à l'intérieur de la cavité 14 de moulage est égale à la pression dans la chambre 34 de compensation.

Durant ce palier 48, à un instant "t3", la vanne 46 de compensation est commandée vers sa position de dérivation. La chambre 34 de compensation est alors en communication directe avec la tuyère 28. Du fait de l'égalité des pressions "Pf" dans la chambre 34 et dans la tuyère 28, aucun changement de pression n'a lieu.

Puis, à l'instant ultérieur "t4", la vanne 32 de formage est commandée vers sa position de détente. Le fluide de formage contenu dans le récipient final et dans la tuyère 28 est donc libre de s'échapper à travers le silencieux 31 vers l'atmosphère. Il se produit ainsi une détente et la pression à l'intérieur de la cavité 14 de moulage baisse jusqu'à atteindre la pression atmosphérique "Pa".

La chambre 34 de compensation étant en communication directe avec la tuyère 28, la pression de la chambre 34 baisse simultanément avec la pression de la tuyère 28, comme cela est représenté à la figure 2.

Lorsque la pression dans la chambre 34 et dans la tuyère 28 est égale à la pression atmosphérique "Pa", à l'instant "t5", le moule 12A, 12B est prêt à être ouvert sans difficultés.

Grâce à la machine 10 et à son procédé de mise en oeuvre, il est ainsi possible de réduire la durée d'un cycle de formage. La temporisation de sécurité nécessaire à une ouverture sans danger du moule 12A, 12B prend en effet place entre les instants "t3" et "t4", lorsque la pression est encore égale à la pression "Pf" de formage dans la tuyère 28.

La chambre 34 de compensation étant en communication directe avec la tuyère 28, ceci assure que la pression dans la chambre 34 de compensation et dans la tuyère 28 sera égale à la pression atmosphérique simultanément.

En outre, le fait de pouvoir mettre en pression la chambre 34 de compensation un instant avant la montée en pression dans la tuyère 28 et dans la préforme assure que le récipient final sera exempt d'empreinte de plan de joint.

## Revendications

1. Machine (10) de formage de récipients en matériau thermoplastique comportant :
- un moule réalisé en au moins deux demi-moules (12A, 12B) délimitant une cavité (14) de moulage lorsque leurs deux faces de joint sont serrées transversalement l'une contre l'autre, la cavité (14) de moulage étant destinée à recevoir un récipient avec un col ;
- deux supports (22A, 22B) dont chacun porte un demi-moule (12A, 12B) associé ;
- une conduite (24) de formage qui est susceptible de raccorder, au moyen d'une tuyère (28), le col du récipient compris dans la cavité (14) de moulage avec au moins une source (26) de fluide à une pression de formage (Pf) ;
- des premiers moyens commandés d'obturation qui sont interposés dans la conduite (24) de formage ;
- au moins une conduite (30) d'échappement qui est raccordée en dérivation avec la conduite (24) de formage entre les premiers moyens commandés d'obturation et la tuyère (28) ;
- des deuxièmes moyens commandés d'obturation qui sont interposés dans chaque conduite (30) d'échappement ;
- au moins une chambre (34) de compensation à pression de fluide qui est interposée transversalement entre au moins un support (22A) et le demi-moule (12A) associé ;
- une conduite (40) de compensation qui raccorde la chambre (34) de compensation avec une source (26) de fluide à une pression de travail, la conduite (40) de compensation étant agencée parallèlement à la conduite (24) de formage ;
- des troisièmes moyens commandés d'obturation qui sont interposés dans la conduite (40) de compensation ;
- une conduite (44) de dérivation qui est raccordée en dérivation avec la conduite (40) de compensation entre les troisièmes moyens d'obturation et la chambre (34) de compensation ;
- des quatrièmes moyens commandés d'obturation qui sont interposés dans la conduite (44) de dérivation ;
**caractérisée en ce que** la conduite (44) de dérivation est raccordée à la conduite (24) de formage entre les premiers moyens d'obstruction et la tuyère (28).

2. Machine (10) selon la revendication précédente, **caractérisée en ce que** les premiers et les deuxièmes moyens d'obturation sont commandés simultanément entre :
- une position de formage dans laquelle les premiers moyens d'obturation permettent la communication entre la tuyère (28) et la source (26) de fluide dont la pression provoque un effort (F1) transversal d'écartement des deux demi-moules (12A, 12B), tandis que les deuxièmes moyens d'obturations obturent la conduite (30) d'échappement ;
- et une position de détente dans laquelle les premiers moyens d'obturation obturent la conduite (24) de formage, tandis que les deuxièmes moyens d'obturation permettent la communication entre la tuyère (28) et des moyens de détente (31) via la conduite (30) d'échappement.

3. Machine (10) selon la revendication précédente, **caractérisée en ce que** les premiers moyens d'obturation et les deuxièmes moyens d'obturation sont formés par une vanne (32) commune à au moins trois voies dite de formage.

4. Machine (10) selon l'une quelconque des revendications 2 ou 3, **caractérisé en ce que** les troisièmes et les quatrièmes moyens d'obturation sont commandés simultanément entre :
- une position de mise sous pression dans laquelle les troisièmes moyens d'obturation permettent la communication entre la chambre (34) de compensation et la source (26) de fluide de travail pour pousser ledit demi-moule (12A) à l'encontre de l'effort d'écartement, tandis que les quatrièmes moyens d'obturations obturent la conduite (44) de dérivation ;
- et une position de dérivation dans laquelle les troisièmes moyens d'obturation obturent la conduite (40) de compensation, tandis que les quatrièmes moyens d'obturation permettent la communication entre la chambre (34) de compensation et la conduite (24) de formage via la conduite (44) de dérivation.

5. Machine (10) selon la revendication précédente, **caractérisée en ce que** les troisièmes moyens d'obturation et les quatrièmes moyens d'obturation sont formés par une vanne (46) commune à au moins trois voies dite de compensation.

6. Machine (10) selon l'une quelconque des revendications précédentes, **caractérisée en ce que** la pression de travail est égale à la pression de formage (Pf).

7. Machine (10) selon la revendication précédente, **caractérisée en ce que** la conduite (24) de formage et la conduite (40) de compensation sont raccordées à une source (26) commune de fluide sous pression.

8. Machine (10) selon l'une quelconque des revendications 2 à 7, **caractérisée en ce que** les moyens (31) de détente comportent une première conduite (30) d'échappement qui est raccordée à la pression atmosphérique (Pa).

9. Machine (10) selon la revendication précédente, **caractérisée en ce que** les moyens de détente comportent une deuxième conduite d'échappement qui est raccordée à un dispositif de stockage d'une partie du fluide dans un réservoir à une pression intermédiaire entre la pression de formage et la pression atmosphérique.

10. Procédé de mise en oeuvre de la machine (10) réalisée selon l'une quelconque des revendications précédentes, **caractérisé en ce que** les troisièmes et quatrièmes moyens d'obturation sont commandés vers leur position de mise sous pression avant que les premiers et deuxièmes moyens d'obturation ne soient commandés vers leur position de formage.

11. Procédé selon la revendication précédente, **caractérisé en ce que** les troisièmes et quatrièmes moyens d'obturation sont commandés vers leur position de dérivation avant que les premiers et deuxièmes moyens d'obturation ne soient commandés vers leur position d'échappement de manière que la pression de fluide dans la chambre (34) de compensation soit équilibrée avec la pression du fluide dans la tuyère (28).

12. Procédé selon la revendication précédente, **caractérisé en ce que** les troisièmes et quatrièmes moyens d'obturation sont commandés vers leur position de dérivation lorsque la pression à l'intérieur de la tuyère (28) est égale à la pression de formage.

## Patentansprüche

1. Maschine (10) zum Formen von Behältern aus thermoplastischem Material, aufweisend:
- eine aus mindestens zwei Formhälften (12A, 12B) ausgeführte Form, welche einen Gießhohlraum (14) abgrenzen, wenn ihre beiden Verbindungsflächen quer gegeneinander zusammengepresst werden, wobei der Gießhohlraum (14) dafür vorgesehen ist, einen Behälter mit einem Kragen aufzunehmen;
- zwei Träger (22A, 22B), welche jeweils eine zugeordnete Formhälfte (12A, 12B) tragen;
- eine Leitung zum Formen (24), welche geeignet ist, den Kragen des Behälters, welcher im Gießhohlraum (14) eingeschlossen ist, mittels einer Düse (28) mit mindestens einer Quelle (26) mit unter einem Verformungsdruck (Pf) stehendem Fluid zu verbinden;
- erste gesteuerte Verschlussmittel, welche in die Leitung zum Formen (24) eingesetzt sind;
- mindestens eine Entlüftungsleitung (30), welche als Abzweigung mit der Leitung zum Formen (24) zwischen den ersten gesteuerten Verschlussmitteln und der Düse (28) verbunden ist;
- zweite gesteuerte Verschlussmittel, welche in jede Entlüftungsleitung (30) eingesetzt sind;
- mindestens eine Kammer (34) zum Ausgleich des Fluiddrucks, welche quer zwischen mindestens einem Träger (22A) und der zugeordneten Formhälfte (12A) eingefügt ist;
- eine Ausgleichsleitung (40), welche die Ausgleichskammer (34) mit einer Fluidquelle (26) mit einem Arbeitsdruck verbindet, wobei die Ausgleichsleitung (40) parallel zur Leitung zum Formen (24) angeordnet ist;
- dritte gesteuerte Verschlussmittel, welche in die Leitung zum Formen (40) eingesetzt sind;
- mindestens eine Bypassleitung (44), welche als Abzweigung mit der Ausgleichsleitung (40) zwischen den dritten gesteuerten Verschlussmitteln und der Ausgleichskammer (34) verbunden ist;
- vierte gesteuerte Verschlussmittel, welche in die Leitung zum Formen (44) eingesetzt sind;
**dadurch gekennzeichnet, dass** die Bypassleitung (44) zwischen den ersten gesteuerten Verschlussmitteln und der Düse (28) mit der Leitung zum Formen (24) verbunden ist.

2. Maschine (10) nach dem vorhergehenden Anspruch, **dadurch gekennzeichnet, dass** die ersten und zweiten Verschlussmittel gleichzeitig gesteuert werden zwischen:
- einer Position zum Formen, in welcher die ersten Verschlussmittel die Verbindung zwischen der Düse (28) und der Fluidquelle (26) ermöglichen, deren Druck eine Querkraft (F1) zum Auseinandertreiben der beiden Formhälften (12A, 12B) bewirkt, während die zweiten Verschlussmittel die Entlüftungsleitung (30) verschließen;
- und einer Entspannungsposition, in welcher die ersten Verschlussmittel die Leitung zum Formen (24) verschließen, während die zweiten Verschlussmittel die Verbindung zwischen der Düse (28) und Entspannungsmitteln (31) über die Entlüftungsleitung (30) ermöglichen.

3. Maschine (10) nach dem vorhergehenden Anspruch, **dadurch gekennzeichnet, dass** die ersten Verschlussmittel und die zweiten Verschlussmittel von einem gemeinsamen Ventil (32) mit mindestens drei Wegen zum so genannten Formen gebildet werden.

4. Maschine (10) nach einem der Ansprüche 2 oder 3, **dadurch gekennzeichnet, dass** die dritten und vierten Verschlussmittel gleichzeitig gesteuert werden zwischen:
- einer Position zum unter Druck setzen, in welcher die dritten Verschlussmittel die Verbindung zwischen der Ausgleichskammer (34) und der Quelle (26) mit Arbeitsfluid ermöglichen, um gegen die Formhälfte (12A) zu drücken, um der Kraft zum Auseinandertreiben zu begegnen, während die vierten Verschlussmittel die Bypassleitung (44) verschließen;
- und einer Entspannungsposition, in welcher die dritten Verschlussmittel die Ausgleichsleitung (40) verschließen, während die vierten Verschlussmittel die Verbindung zwischen der Ausgleichskammer (34) und der Leitung zum Formen (24) über die Bypassleitung (44) ermöglichen.

5. Maschine (10) nach dem vorhergehenden Anspruch, **dadurch gekennzeichnet, dass** die dritten Verschlussmittel und die vierten Verschlussmittel von einem gemeinsamen Ventil (46) mit mindestens drei Wegen zum so genannten Ausgleich gebildet werden.

6. Maschine (10) nach einem der vorhergehenden Ansprüche, **dadurch gekennzeichnet, dass** der Arbeitsdruck gleich dem Formdruck (Pf) ist.

7. Maschine (10) nach dem vorhergehenden Anspruch, **dadurch gekennzeichnet, dass** die Leitung zum Formen (24) und die Ausgleichsleitung (40) mit einer gemeinsamen Quelle (26) mit unter Druck stehendem Fluid verbunden sind.

8. Maschine (10) nach einem der Ansprüche 2 bis 7, **dadurch gekennzeichnet, dass** die Entspannungsmittel (31) eine erste Entlüftungsleitung (30) aufweisen, welche mit dem atmosphärischen Druck (Pa) verbunden ist.

9. Maschine (10) nach dem vorhergehenden Anspruch, **dadurch gekennzeichnet, dass** die Entspannungsmittel eine zweite Entlüftungsleitung aufweisen, welche mit einer Vorrichtung zum Speichern eines Teils des Fluids in einem Tank mit einem Druck verbunden ist, welcher zwischen dem Formdruck und dem atmosphärischen Druck liegt.

10. Verfahren zum Verwenden der Maschine (10), welche nach einem der vorhergehenden Ansprüche ausgeführt ist, **dadurch gekennzeichnet, dass** die dritten und vierten Verschlussmittel in ihre Position zum unter Druck setzen gesteuert werden, bevor die ersten und zweiten Verschlussmittel in ihre Position zum Formen gesteuert werden.

11. Verfahren nach dem vorhergehenden Anspruch, **dadurch gekennzeichnet, dass** die dritten und vierten Verschlussmittel in ihre Bypassposition gesteuert werden, bevor die ersten und zweiten Verschlussmittel derart in ihre Entlüftungsposition gesteuert werden, dass der Fluiddruck in der Ausgleichskammer (34) mit dem Fluiddruck in der Düse (28) ausgeglichen ist.

12. Verfahren nach dem vorhergehenden Anspruch, **dadurch gekennzeichnet, dass** die dritten und vierten Verschlussmittel in ihre Bypassposition gesteuert werden, wenn der Druck im Inneren der Düse (28) gleich dem Formdruck ist.

## Claims

1. Machine (10) for forming containers made of thermoplastic material, comprising:
- a mold made of at least two half-molds (12A, 12B) delimiting a molding cavity (14) when their two joint faces are clamped transversely together, the molding cavity (14) being intended to receive a container with a neck;
- two supports (22A, 22B), each of which carries an associated half-mold (12A, 12B);
- a forming pipe (24) able to connect via a nozzle (28) the neck of the container held in the molding cavity (14) to at least one fluid source (26) at a forming pressure (Pf);
- first controlled sealing means interposed in the forming pipe (24);
- at least one escape pipe (30) connected as a bypass to the forming pipe (24) between the first controlled sealing means and the nozzle (28) ;
- second controlled sealing means interposed in each escape pipe (30);
- at least one compensation chamber (34) at fluid pressure which is interposed transversely between at least one support (22A) and the associated half-mold (12A);
- a compensation pipe (40) which connects the compensation chamber (34) to a source (26) of fluid at a working pressure, the compensation pipe (40) being arranged parallel to the forming pipe (24);
- third controlled sealing means interposed in the compensation pipe (40);
- a bypass pipe (44) connected as a bypass to the compensation pipe (40) between the third sealing means and the compensation chamber (34);
- fourth controlled sealing means interposed in the bypass pipe (44);
**characterized in that** the bypass pipe (44) is connected to the forming pipe (24) between the first sealing means and the nozzle (28).

2. Machine (10) according to the preceding claim, **characterized in that** the first and second sealing means are controlled simultaneously between:
- a forming position in which the first sealing means allow communication between the nozzle (28) and the fluid source (26), the pressure of which provokes a transverse spacing force (F1) between the two half-molds (12A, 12B), while the second sealing means seal the escape pipe (30);
- and a relief position in which the first sealing means seal the forming pipe (24) while the second sealing means allow communication between the nozzle (28) and the relief means (31) via the escape pipe (30).

3. Machine (10) according to the preceding claim, **characterized in that** the first sealing means and the second sealing means are formed by a common valve (32) with at least three ways, called a forming valve.

4. Machine (10) according to one of Claims 2 or 3, **characterized in that** the third and fourth sealing means are controlled simultaneously between:
- a pressurization position in which the third sealing means allow communication between the compensation chamber (34) and the source (26) of working fluid, in order to push said half-mold (12A) against the spacing force, while the fourth sealing means seal the bypass pipe (44);
- and a bypass position in which the third sealing means seal the compensation pipe (40) while the fourth sealing means allow communication between the compensation chamber (34) and the forming pipe (24) via the bypass pipe (44).

5. Machine (10) according to the preceding claim, **characterized in that** the third sealing means and the fourth sealing means are formed by a common valve (46) with at least three ways, called a compensation valve.

6. Machine (10) according to any of the preceding claims, **characterized in that** the working pressure is equal to the forming pressure (Pf).

7. Machine (10) according to the preceding claim, **characterized in that** the forming pipe (24) and the compensation pipe (40) are connected to a common source (26) of pressurized fluid.

8. Machine (10) according to any of Claims 2 to 7, **characterized in that** the relief means (31) comprise a first escape pipe (30) which is connected to atmospheric pressure (Pa).

9. Machine (10) according to the preceding claim, **characterized in that** the relief means comprise a second escape pipe which is connected to a device for storing part of the fluid in a reservoir at an intermediate pressure between the forming pressure and atmospheric pressure.

10. Method for use of the machine (10) produced according to any of the preceding claims, **characterized in that** the third and fourth sealing means are controlled towards their pressurization position before the first and second sealing means are controlled towards their forming position.

11. Method according to the preceding claim, **characterized in that** the third and fourth sealing means are controlled towards their bypass position before the first and second sealing means are controlled towards their escape position, such that the fluid pressure in the compensation chamber (34) is balanced with the fluid pressure in the nozzle (28).

12. Method according to the preceding claim, **characterized in that** the third and fourth sealing means are controlled towards their bypass position when the pressure inside the nozzle (28) is equal to the forming pressure.
